**Europäisches Patentamt**

**European Patent Office**

**Office européen des brevets**

(11) Veröffentlichungsnummer: **0 151 667**

**A1**

(12) # EUROPÄISCHE PATENTANMELDUNG

(21) Anmeldenummer: **84101584.5**

(51) Int. Cl.⁴: **F 03 D 3/06**

(22) Anmeldetag: **16.02.84**

(43) Veröffentlichungstag der Anmeldung:
**21.08.85 Patentblatt 85/34**

(84) Benannte Vertragsstaaten:
**AT BE CH FR GB IT LI LU NL SE**

(71) Anmelder: **Herter, Erich**
**Am Pelz, 66**
**D-6100 Darmstadt(DE)**

(71) Anmelder: **Herter, Gunnar**
**Am Pelz, 66**
**D-6100 Darmstadt(DE)**

(72) Erfinder: **Herter, Erich**
**Am Pelz, 66**
**D-6100 Darmstadt(DE)**

(72) Erfinder: **Herter, Gunnar**
**Am Pelz, 66**
**D-6100 Darmstadt(DE)**

(74) Vertreter: **Wolf, Günter, Dipl.Ing.**
**Patentanwälte Dipl.-Ing. Amthor Dipl.-Ing. Wolf Postfach**
**70 02 45 An der Mainbrücke 16**
**D-6450 Hanau 7(DE)**

(54) **Windturbine.**

(57) Die Windturbine besteht aus einem um eine vertikale Achse drehbaren Rotor, wobei an den Enden der beiden gleichgerichteten Rotorarme Strömungsfangblätter angeordnet sind. Die Strömungsfangblätter (1') sind in ihrem mittigen Anlenkbereich (2) an den Rotorarmen (3) mit einer strömungsgünstig geformten vorspringenden Nase (4) versehen, mit der das jeweilige Strömungsfangblatt am Rotorarmende (5) angelenkt ist. In einer Ausnehmung (6) der Nase (4) ist ein entsprechend kleiner Strömungskörpder (7) angeordnet und fest mit dem Rotorarmende (5) verbunden. Hinten oder vorn am Strömungskörper (7) ist ein schwenkbares und mittels Anschlägen (8) mit dem Strömungsfangblatt in Sperrwirkung bringbares Sperrblatt (9) vorgesehen. Die Rotorarme (3) sind gemeinsam in Bezug auf die Rotorachse in einer die Rotorachse enthaltnden Ebene aus einer unter der Wirkung eines Gegendruckelementes aufrechterhaltenen Schrägstellung unter Einwirkung der Rotorfliehkraft in Horizontalstellung bringbar ausgebildet. An der Rotorachse ist ein die Turbine stabilisierendes Kreiselelement angeordnet.

fig. 1

## Windturbine

Die Erfindung betrifft eine Windturbine gemäß Oberbegriff des Hauptanspruches.

Derartige Windturbinen sind allgemein bekannt und werden im Prinzip bzw. durch folgenden, schon ziemlich alten Stand der Technik repräsentiert: US-PS 11 39 1o3, FR-PS 921 518, DE-PS 51 87 33.

Anknüpfend an dieses alte Bauprinzip hat es Weiterentwicklungen gegeben, wozu auf bspw. die DE-OS 3o 26 315, DE-OS 28 31 731 und DE-OS 31 21 1o6 hinzuweisen ist. Derartige Windturbinen unterliegen einer vielgestaltigen Problematik, da sie den verschiedenartigsten Gesichtspunkten und Gegebenheiten Rechnung tragen müssen, bspw. Anlaufverhalten, Erreichen möglichst hoher Drehzahlen bei ruhigem Lauf, Sturmsicherheit, optimale Einstellbarkeit der Flügel bzw. Strömungsfangblätter mit möglichst geringem Aufwand an Verstellelementen und das Ganze bei möglichst leichter und wenig aufwendiger Bauweise.

Soweit man diesbezüglich den oben genannten Stand der Technik betrachtet, ist festzustellen, daß, abgesehen von den jahrzehnte alten Turbinen dieser Art, die oben
genannten Gesichtspunkte allein schon aufgrund ihrer
aufwendigen Konstruktionen nicht Rechnung tragen können,
bei allen Weiterentwicklungen gewissermaßen immer nur
an Details herum kuriert wurde, ohne dabei zu berücksichtigen, daß bei solchen Turbinen alle angedeuteten
Gegebenheiten wirksam werden, wobei es möglich ist,
daß eine Verbesserung im Detail durchaus wieder negative Auswirkungen auf das Gesamtverhalten haben kann.

Der Erfindung liegt demgemäß die Aufgabe zugrunde, eine Turbine der eingangs genannten Art dahingehend zu
verbessern, daß den oben genannten Gesichtspunkten
insgesamt Rechnung getragen ist.

Diese Aufgabe ist mit einer Turbine der eingangs genannten Art nach der Erfindung durch das im Kennzeichen des
Hauptanspruches Erfaßte gelöst. Vorteilhafte Weiterbildungen ergeben sich nach den Unteransprüchen.

Durch diese Ausbildung ergibt sich folgendes:
Für den Anlauf bzw. für geringe Windgeschwindigkeiten
laufen die Strömungsfangblätter aufgrund der Zwangsschrägstellung der Rotorarme in voneinander unabhängigen Räumen und stören sich somit nicht gegenseitig.
Erst bei zunehmenden Drehzahlen, d.h. bei entsprechenden
Fliehkräften gehen die Rotorarme im Extremfall bis in die Horizontalstellung, was aber mit einer gewissen Reduzierung der Drehzahl verbunden ist, d.h., der Rotor paßt sich selbsttätig und optimal den jeweiligen Gegebenheiten an, was auch für die erfindungsgemäße Anlenkung der Strömungsfangblätter an die Rotorarme gilt. Diese sind nämlich durch die Anordnung der Gelenke im Bereich der vorspringenden Nase nach Art eines Pendels befestigt, wobei die zeppelinartige Nase den ganzen mittigen Anlenkbereich ebenfalls strömungsgünstig werden läßt und Unterbringungsmöglichkeiten für die Anwendung eines einfachen Verstellbegrenzungselement bietet, was noch näher erläutert wird.

Als wesentlich hat sich auch erwiesen, die ganze Turbine mit einem Kreiselelement auszustatten, das die Turbine stabilisiert, was entscheidend ist, um der Turbine einen ruhigen Lauf zu vermitteln und nach außen wirksam werdende Kräfte zu reduzieren und damit massive und aufwendige Mastkonstruktionen vermeiden zu können.

Überraschenderweise hat sich gezeigt,daß eine derart ausgebildete Turbine sogar bei Windgeschwindigkeiten von ca. 160 km/h funktionsfähig geblieben und einfach weitergelaufen ist, ohne daß sonstige Maßnahmen zur Sturmsicherheit getroffen werden mußten. Ohne diesbezüglich genaueres sagen zu können, kann zunächst nur vermutet werden, daß dies aus dem Zusammenwirken aller genannten Merkmale resultiert.

Die erfindungsgemäße Turbine wird nachfolgend anhand
der zeichnerischen Darstellung eines Ausführungsbeispieles näher erläutert.

Es zeigt

Fig. 1 perspektivisch den mittigen Anlenkbereich
        eines Strömungsfangblattes am Rotorarm;

Fig. 2 perspektivisch den mittigen Anlenkbereich
        der beiden gleichgerichteten Rotorarme am
        Turbinenmast bzw. der Rotorachse;

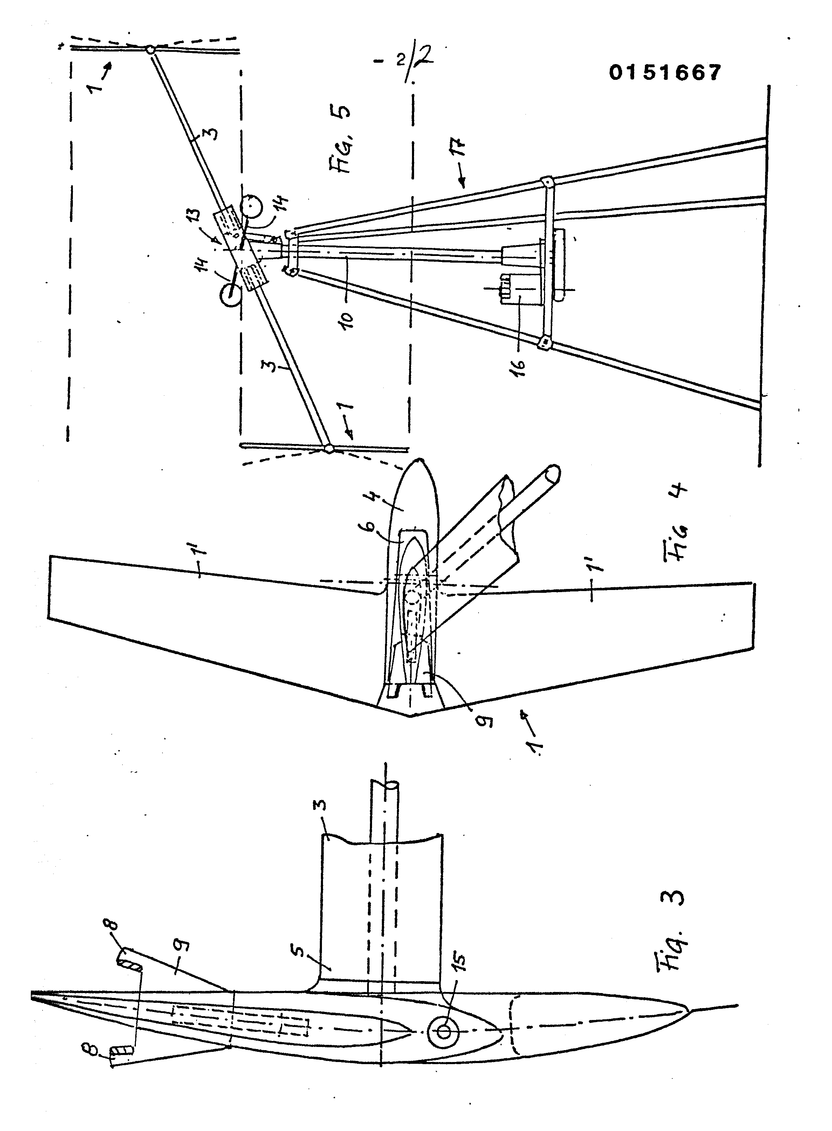

Fig. 3 einen Prinzipschnitt durch den mittigen
        Anlenkbereich gemäß Fig. 1;

Fig. 4 perspektivisch ein Strömungsfangblatt in
        Seitenansicht und

Fig. 5 in Ansicht die Gesamtturbine mit Rotorachse
        und Mast.

Wie die Figuren erkennen lassen, sind die Strömungsfangblätter 1, die vorteilhaft gemäß Fig. 5 leicht
geknickt bzgl. ihrer Hälften am Rotorarm 3 angeordnet
sind (in Fig. 5 gestrichelt angedeutet), in ihrem mittigen Anlenkbereich 2 an den Rotorarmen 3 mit einer
zeppelinartigen, vorspringenden Nase 4 versehen, mit
der das jeweilige Strömungsfangblatt 1 durch ein geeignetes Gelenk 15 pendelartig am Rotorarmende 5 angelenkt
ist.

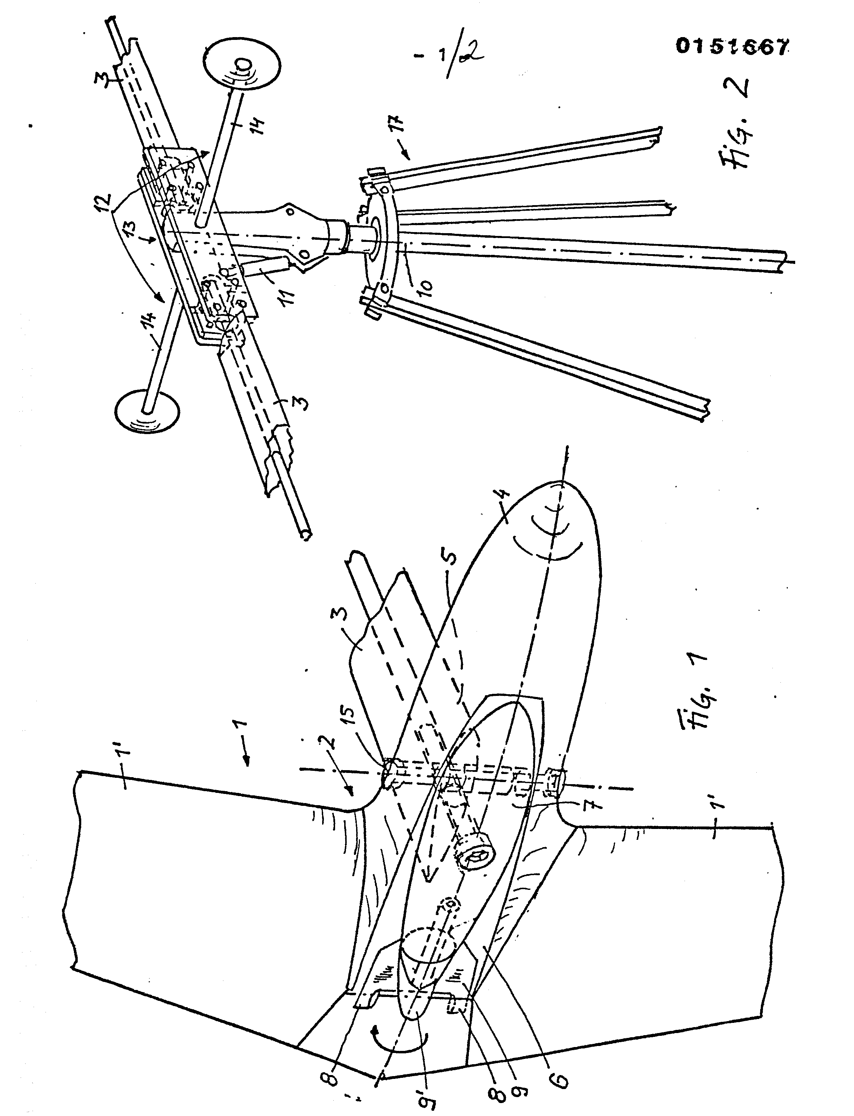

Die Nase 4 ist, wie aus Fig. 1,4 erkennbar, mit einer
Ausnehmung 6 versehen, in der, fest mit dem Rotorarmende verbunden, ein in seiner Größe entsprechend angepaßter Strömungskörper 7 angeordnet ist, der beim Ausführungsbeispiel hinten ein drehbares und mit Anschlägen 8 versehenes Sperrblatt 9 aufweist, das sich in
der dargestellten Stellung mit seinen Anschlägen 8
durch Fliehkraftwirkung (Fliehkraftgewicht 9') in Bezug auf das Strömungsfangblatt in Sperrstellung befindet, d.h., das Strömungsfangblatt nimmt für die entsprechende Drehzahl seine optimale Stellung ein. Die Betätigung des Sperrblattes 9 unter Fliehkraftwirkung ist
nicht zwingend, wenn auch wegen der Einfachheit bevorzugt, sondern die Einstellung kann auch durch andere
geeignete Maßnahmen bewirkt werden, bspw. elektronische
Steuerung, ausgehend von einer magnetischen oder optischen Drehzahlmessung, Frequenzmessung am Generator 16,
Staudruckmessung am Strömungsfangblatt od. dgl.

Wie aus Fig. 2 und 5 erkennbar, sind die beiden gleichgerichteten Rotorarme 3, die vorteilhaft im Querschnitt
einem schlanken Tragflügel- bzw. Tropfenprofil entsprechen,
gemeinsam in Bezug auf die Rotorachse 10 in einer unter
der Wirkung eines entsprechend eingestellten Gegendruckelementes 11, wie Feder od. dgl. aufrechterhaltenen
Schrägstellung unter Einwirkung der Fliehkraft in Horizontalstellung bringbar ausgebildet und ferner ist direkt oder indirekt an der Rotorachse lo ein die ganze Turbine stabilisierendes Kreiselelement 12 angeordnet, das gemäß dargestelltem Ausführungsbeispiel in Form zwei gleichgerichteter, senkrecht zur Gesamtrotorarmlängsachse (unabhängug davon, ob sie geneigt oder horizontal steht) keulenartiger Fortsätze 14 ausgebildet ist, die im Neutralbereich des Rotorarmgelenkes 13 an diesem selbst bzw. an der Rotorachse lo befestigt sind.

Selbstverständlich könnte das Kreiselelement 12 bspw. auch in Form einer Kreisscheibe mit geeignet bemessener Masse, dann aber zwingend in Anordnung an der Achse ausgebildet sein.

Die Struktur und Bauweise der Strömungsfangblätter 1 bedarf im einzelnen keiner näheren Erläuterung, da hierbei ohne weiteres auf Kenntnisse und Praktiken bezüglich der Rotorblätter zum Hubschrauben zurückgegriffen werden kann.

Die Anordnung des zeppelinartigen Fortsatzes bzw. der Nase 4 führt nicht nur zu einer strömungsgünstigen Gestaltung im mittleren Anlenkbereich der Strömungsfangblätter an den Rotorarmenden 5, sondern bietet auch konstruktiv günstige Voraussetzungen zum Einbau des Gelenkes 15 und des Sperrblattes 9 einerseits und

andererseits auch für einen günstigen Ansatz und feste
Einbindungsmöglichkeit der Wurzeln der Fangblatthälften
an den mittleren Anlenkbereich.

Wie aus Fig. 4 erkennbar, sind im Übrigen die Fangblatthälften 1' zueinander entgegengesetzt zur Drehrichtung
des Rotors schwach nach hinten gepfeilt angeordnet.

In der praktischen Verwirklichung eines Prototyps haben
die Strömungsfangblätter 1 eine Größe von etwa 1, 6 m,
wobei Rotorarmlängen und Höhe des Mastes 17 zur Größe
der Fangblätter 1 etwa in Relation stehen, wie sie sich
aus Fig. 5 ergibt. Eine derartige Turbine leistet bei
einer Windgeschwindigkeit von etwa 1o m/sec etwa 2 KW,
wobei eine Schnellaufzahl von 1o - 12 zugrundeliegt.

Patentansprüche:


1. Windturbine zur Umsetzung der Energie einer frei anströmenden Strömung, bestehend aus einem um eine vertikale Achse drehbaren Rotor mit um die Achse drehenden
Rotorarmen, wobei an den Enden der beiden gleichgerichteten Rotorarme Strömungsfangblätter mit mittigem Anlenkbereich angeordnet sind, d a d u r c h   g e k e n n -
z e i c h n e t , daß die Strömungsfangblätter (1) in ihrem
Anlenkbereich (2) mit einer strömungsgünstig geformten, vorspringenden Nase (4) versehen sind, in der gelenkig in einer
rückwärtigen Ausnehmung (6) ein entsprechend kleiner Strömungskörper (7) angeordnet ist, der fest mit dem Rotorarmende
(5) verbunden ist, wobei hinten oder vorn am Strömungskörper (7) ein schwenkbares und mittels Anschlägen (8) mit
dem Strömungsumfangblatt in Sperrwirkung bringbares Sperrblatt
(9) angeordnet ist; daß die Rotorarme (3) gemeinsam in Bezug auf die Rotorachse (10) in einer die Rotorachse (10) enthaltenen Ebene aus einer unter der Wirkung eines Gegendruckelementes (11) aufrechterhaltenen Schrägstellung unter Einwirkung der Rotorfliehkraft in Horizontalstellung bringbar ausgebildet sind und daß an der Rotorachse (10) ein
die Turbine stabilisierendes Kreiselelement (12) angeordnet
ist.

0151667

2. Turbine nach Anspruch 1, d a d u r c h
   g e k e n n z e i c h n e t, daß das Sperrblatt (9)
   unter Fliehkraftwirkung einstellbar ausgebildet ist.

3. Turbine nach Anspruch 1, d a d u r c h
   g e k e n n z e i c h n e t, daß das Sperrblatt (9)
   mittels steuerbarer Stellelemente einstellbar ausgebildet ist.

4. Turbine nach jedem der Ansprüche 1 bis 3,
   d a d u r c h  g e k e n n z e i c h n e t, daß die
   Rotorarme (3) im Querschnitt in Form eines schlanken
   Tragflügel-bzw. Tropfenprofiles ausgebildet sind.

5. Turbine nach jedem der Ansprüche 1 bis 4,
   d a d u r c h  g e k e n n z e i c h n e t, daß das
   Gegendruckelement (11) in Form einer Feder, Stoßdämpfer- Federkombination od. dgl. ausgebildet ist.

6. Turbine nach jedem der Ansprüche 1 bis 5,
   d a d u r c h  g e k e n n z e i c h n e t, daß das
   Kreiselelement (12) in Form einer unterhalb des
   Rotorarmgelenkes (13) an der Achse (1o) angeordneten
   Kreisscheibe ausgebildet ist.

7. Turbine nach jedem der Ansprüche 1 bis 5,
   d a d u r c h   g e k e n n z e i c h n e t, daß
   das Kreiselelement (12) in Form zweier gleichgerichteter keulenartiger Fortsätze (14) ausgebildet ist, die im Neutralbereich des Rotorarmgelenkes (13) der Rotorachse (1o) befestigt sind.

8. Turbine nach jedem der Ansprüche 1 bis 7,
   d a d u r c h   g e k e n n z e i c h n e t, daß
   die Strömungsfangblätter (1) bezüglich ihrer
   vom mittigen Anlenkbereich aus-gehenden Hälften(1')
   zueinander und in Bezug auf den Rotorarm (3) geknickt angeordnet sind.

FIG. 1

FIG. 2

- 1/2

0151667

0151667

- 2/2

Fig. 5

Fig. 4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| D,A | DE-A-3 026 315 (HERTER)<br><br>* Seite 11, Zeile 7 - Seite 12, Zeile 14 *<br><br>--- | 1,2,3,4 | F 03 D 3/06 |
| A | EP-A-0 095 600 (HERTER)<br><br>* Seite 3, Zeile 13 - Ende; Abbildungen 1,7 *<br><br>--- | 1,4,6,7,8 | |
| A | EP-A-0 065 778 (HERTER)<br><br>* Seite 14, Zeile 3 - Seite 15, Zeile 20 * & DE - A - 321 106 (Kat. D) | 1,2,3,4,8 | |
| A | * Seite 16, Zeile 13 - Seite 17, Zeile 16 *<br><br>--- | 5 | RECHERCHIERTE SACHGEBIETE (Int Cl ³)<br><br>F 03 D |
| A | FR-A-2 398 195 (EVANS)<br><br>& DE - A - 2 831 173 (Kat. D)<br><br>--- | | |
| A | US-A-4 105 363 (LOTH)<br>* Spalte 2, Zeilen 23-49 *<br><br>----- | 1,2 | |

Der vorliegende Recherchenbericht wurde für alle Patentansprüche erstellt.

| Recherchenort<br>DEN HAAG | Abschlußdatum der Recherche<br>23-10-1984 | Prüfer<br>DE WINTER P.E.F. |
|---|---|---|